# EUROPÄISCHE PATENTSCHRIFT

(11) **EP 2 493 673 B1**
(45) Veröffentlichungstag und Bekanntmachung des Hinweises auf die Patenterteilung: **12.07.2017**
(21) Anmeldenummer: 10768688.3
(22) Anmeldetag: 09.10.2010
(51) Int. Cl.: B29C 47/02, B29C 70/52, B29C 47/28, B29C 47/20

(54) **VERFAHREN ZUR HERSTELLUNG EINES FASERVERSTÄRKTEN EXTRUSIONSPROFILS**
METHOD FOR PRODUCING A FIBER-REINFORCED EXTRUSION PROFILE
PROCÉDÉ DE PRODUCTION D'UN PROFILÉ EXTRUDÉ RENFORCÉ

(30) Priorität: 28.10.2009 DE 102009051058
(43) Veröffentlichungstag der Anmeldung: 05.09.2012
(73) Patentinhaber: REHAU AG + Co, 95111 Rehau (DE)
(72) Erfinder: AL-SHEYYAB, Ahmad, 95111 Rehau (DE); SANDER, Ralf, 95494 Gesees (DE)
(86) Internationale Anmeldenummer: PCT/EP2010/006177
(87) Internationale Veröffentlichungsnummer: WO 2011/050899

(56) Entgegenhaltungen:
- EP-A1- 0 867 270
- EP-A2- 1 245 775
- DE-A1- 2 138 427
- DE-A1- 2 312 816
- DE-A1-102004 041 454
- DE-A1-102007 039 009
- DE-B- 1 167 514
- US-A- 5 096 645
- US-A- 5 482 667
- US-A1- 2005 214 465
- Carl Hanser Verlag ET AL: "Lokal verstärkte Bauteile_ Maßgeschneidert leicht", , 30 December 2003 (2003-12-30), XP055169957, Retrieved from the Internet: URL:https://www.kunststoffe.de/kunststoffe -zeitschrift/archiv/artikel/lokal-verstaer kte-bauteile-massgeschneidert-leicht-52903 2.html [retrieved on 2015-02-16]

## Beschreibung

Die Erfindung betrifft ein Verfahren zur Herstellung eines faserverstärkten Extrusionsprofils.

Im Stand der Technik ist es bekannt, Kunststoff-Extrusionsprofile mittels Stahl- bzw. Blecharmierungen zu verstärken. Dies führt zwar zur gewünschten Erhöhung der mechanischen Belastbarkeit des Profils, ist aber auch mit Nachteilen verbunden. Zu nennen sind hier die vergleichsweise hohen Herstellungskosten, das durch die Metalleinlage bedingte deutlich höhere Gewicht und die fehlende Verschweißbarkeit. Darüber hinaus zeigen diese Verbundprofile thermische Eigenschaften, die häufig unerwünscht sind, und neigen zur Korrosion.

Es ist ferner bekannt, Kunststoffprofile mittels rein unidirektional ausgerichteten, nebeneinander liegenden Verstärkungsfasern zu armieren. Gegenüber der Stahlarmierung zeichnet sich dieses Verfahren durch ein geringeres Gewicht der damit hergestellten Profile aus. Allerdings ist auch die Performance, also die mechanische Belastbarkeit, hier deutlich niedriger als bei einer Stahlarmierung. Ferner wird bei diesem Verfahren eine Pull-Extrusion eingesetzt, welche gegenüber einer klassischen Extrusion verfahrenstechnische Nachteile aufweist.

Die US 5 482 667 A zeigt ein Verfahren zur Herstellung eines faserverstärkten Extrusionsprofils, bei dem Verstärkungsfasern von einer Rolle abgezogen werden. Die Fasern werden dann vorgewärmt und anschließend mit einem Harz getränkt. Im selben Arbeitsgang erfolgt danach eine Ummantelung dieses Materials mittels einer Online-Extrusion.

Die DE 21 38 427 A1 offenbart die Armierung eines Kunststoffrohres. Auch hier werden aufgerollte Verstärkungsfasern abgezogen und sodann auf das zu armierende Profil aufgetragen.

Die DE 11 67 514 B zeigt ebenfalls eine Online-Herstellung eines faserverstärkten Extrusionsoprofils. Zunächst werden Verstärkungsgarne von Rollen abgezogen und anschließend durch ein Harzbad gezogen, wodurch die Fasern getränkt werden. Danach erfolgt Online die Einextrusion dieser Armierungsfasern in ein Kunststoffprofil. Auch die US 5 096 645 A zeigt die Herstellung von getränkten Fasern, welche danach unmittelbar in ein Profil einextrudiert werden.

Die US 2005/0214465 A1 beschreibt die Herstellung von Organoblechen, welche anschließend auf unterschiedliche Weise weiter verarbeitet werden können. Aus der EP 1 245 775 A2 ist ein glasfaserverstärktes Fensterprofil aus Kunststoff bekannt.

Aus der EP 0 867 270 A1 ist ein Verfahren zur Herstellung eines faserverstärkten Extrusionsprofils bekannt, bei dem eine vorzugsweise gewebeartige Faserstruktur in ein Extrusionswerkzeug einläuft und darin ummantelt wird.

Die der Erfindung zu Grunde liegende Aufgabe besteht darin, ein Verfahren zur Herstellung eines Extrusionsprofils anzugeben, welches sich durch eine sehr hohe mechanische Belastbarkeit bei gleichzeitig niedrigem Gewicht auszeichnet.

Erfindungsgemäß wird diese Aufgabe gelöst durch ein Verfahren mit den Merkmalen des Patentanspruchs 1.

Durch den Einsatz des erfindungsgemäßen Faser-Matrix-Halbzeuges wird die mechanische Performance gegenüber einer allein aus nebeneinander liegenden Verstärkungsfasern bestehenden Armierung deutlich erhöht. Gegenüber einer Stahlarmierung zeichnet sich das erfindungsgemäße Verfahren durch ein deutlich geringeres Gewicht des damit hergestellten Extrusionsprofils aus. Zweckmäßigerweise handelt es sich bei der Basis-Kunststoff-Matrix um ein unverstärktes Material. Als Materialien können hier vorzugsweise Polyvinylchlorid (PVC), Polyamid (PA), Polypropylen (PP), Polybutylenterephthalat (PBT), Polyethylenterephthalat (PET) oder aber auch Polyphenylensulfid (PPS) sowie Mischungen der vorgenannten Materialien zum Einsatz kommen. Im Rahmen der Erfindung liegt es aber auch, für die Basis-Kunststoff-Matrix selbst bereits ein mit Fasern (z.B. Glas- und/oder Kohlenstoff- und/oder Aramidfasern) verstärktes Material zu verwenden, wobei natürlich auch hier die gerade genannten Materialien zur Bereitstellung der Matrix zum Einsatz kommen können.

Als Verstärkungsfasern werden vorzugsweise Glasfasern, Kohlenstofffasern oder Aramidfasern eingesetzt, wobei auch Mischungen von zwei der genannten Fasermaterialien bzw. aller drei Fasermaterialien im Rahmen der Erfindung liegen. Die Verstärkungsfasern werden zunächst in der Kunststoff-Matrix getränkt und bilden nach der Konsolidierung der Matrix gemeinsam mit dieser das Faser-Matrix-Halbzeug. Bevorzugte Einsatzgebiete der mit dem erfindungsgemäßen Verfahren hergestellten Extrusionsprofile sind der Automobilbau (PKW- und/oder LKW-Bau), der Kühlgerätebau (insbesondere Kühlgeräterahmen), Klimaanlagenbau, der Baubereich allgemein, insbesondere Fensterprofile und Pfostenprofile, der Flugzeug- und auch der Schiffsbau. Die Profile sind aber selbstverständlich auch im allgemeinen Maschinen- und Anlagenbau einsetzbar. Erfindungsgemäß wird die Oberfläche des Extrusionsprofils ausschließlich von der Basis-Kunststoff-Matrix gebildet.

Vorzugsweise wird das Faser-Matrix-Halbzeug vor dem Extrusionsprozess umgeformt, insbesondere geknickt oder gekrümmt. Insbesondere ist auch eine mehrfache Knickung möglich. Dies erlaubt eine flexible Anpassung der Geometrie der Faser-Verstärkung an den Querschnitt des Extrusionsprofils. Im Rahmen der Erfindung liegt es ferner, dass mehrere Faser-Matrix-Halbzeuge in die Basis-Kunststoff-Matrix einextrudiert werden. Als Material für die Kunststoff-Matrix, in die die Verstärkungsfasern integriert sind, eignet sich insbesondere PP, PA, PBT, PET oder PPS bzw. Mischungen dieser Materialien.

Die Verstärkungsfasern sind erfindungsgemäß allesamt in Bahnrichtung ausgerichtet. Das Extrusionsprofil selbst kann als geschlossenes oder aber auch als offenes Hohlprofil ausgebildet sein. Ebenfalls im Rahmen der Erfindung liegt es, dass das mit dem erfindungsgemäßen Verfahren hergestellte Extrusionsprofil neben dem Faser-Matrix-Halbzeug zusätzlich eine Metallarmierung, beispielsweise in Form eines einextrudierten Metallbleches, enthält. Im Rahmen der Erfindung liegt es auch, dass mehrere Faser-Matrix-Halbzeuge übereinander in geschichteter Form in die Basis-Kunststoff-Matrix einextrudiert werden.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Verfahren zur Herstellung eines faserverstärkten Extrusionsprofils,
- Fig. 2: unterschiedliche, zum Teil nicht erfindungsgemäße Ausführungsformen hinsichtlich der Ausrichtung der Verstärkungsfasern eines mit einem Verfahren gemäß Fig. 1 hergestellten Extrusionsprofils und
- Fig. 3a bis 3f: unterschiedliche, mit dem erfindungsgemäßen Verfahren hergestellte Extrusionsprofile in der Querschnittsdarstellung.
- Fig. 4: den Schnitt A-A in Fig. 1

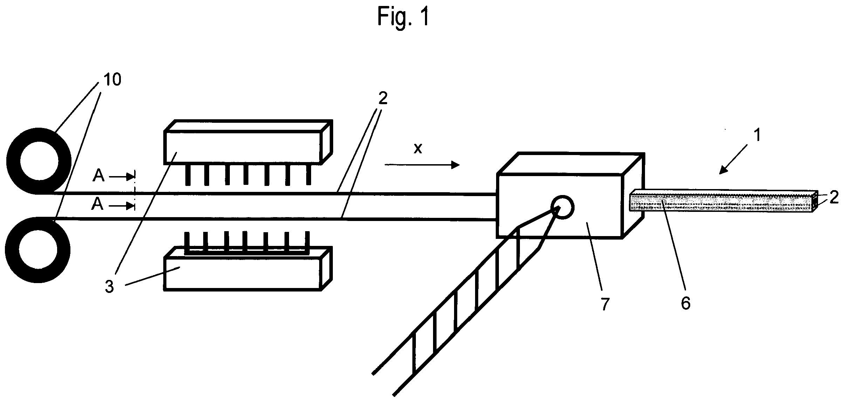

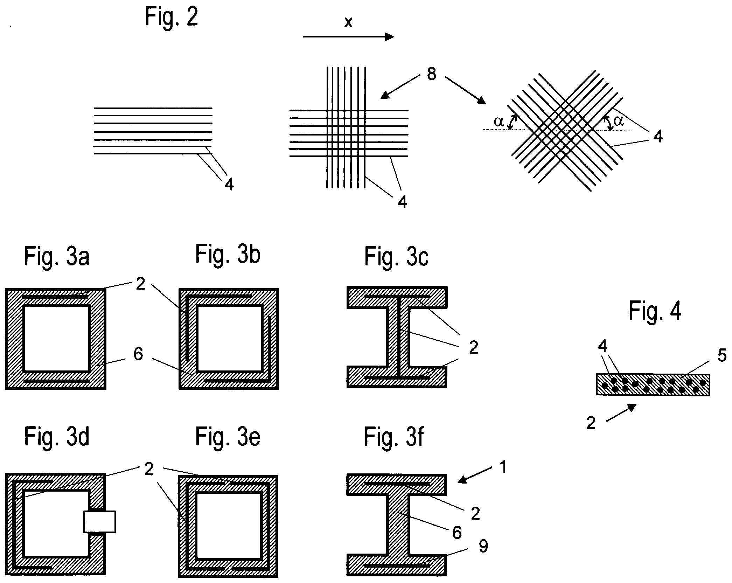

Fig. 1 zeigt ein Verfahren zur Herstellung eines faserverstärkten Extrusionsprofils 1. Zunächst werden zwei bahnförmige Faser-Matrix-Halbzeuge 2 von Bandrollen 10 abgezogen und mittels Wärmestrahler 3 vorgewärmt. Die Faser-Matrix-Halbzeuge 2 weisen Verstärkungsfasern 4 (s. Fig. 4) aus Glas- und/oder Kohlenstoff- und/oder Aramidfasern auf, wobei die Verstärkungsfasern 4 in eine Kunststoff-Matrix 5 integriert sind. Nach der Vorwärmung werden die Faser-Matrix-Halbzeuge 2 in eine unverstärkte (oder alternativ auch faserverstärkte) Basis-Kunststoff-Matrix 6 einextrudiert. Das Material der Basis-Kunststoff-Matrix 6, z. B. PVC, PA, PP, PBT, PET, PPS oder Mischungen der genannten Materialien, wird einem Extruder 7 zugeführt, so dass am Austritt des Extruders 7 das gewünschte faserverstärkte Extrusionsprofil 1 vorliegt. Wie den Figuren 3a bis 3f entnommen werden kann, wird die Oberfläche des Extrusionsprofils 1 ausschließlich von der Basis-Kunststoff-Matrix 6 gebildet. Bei den Ausführungsformen gemäß Fig. 3b, 3d und 3e wurde das bzw. wurden die Faser-Matrix-Halbzeuge 2 vor dem Extrusionsprozess geknickt, bei den Ausführungsbeispielen gemäß Fig. 3d und 3e jeweils zweifach. Alternativ hierzu ist, beispielsweise bei der Herstellung von Rohren, auch eine Krümmung der Faser-Matrix-Halbzeuge vor dem Extrusionsprozess denkbar. Im Ausführungsbeispiel werden als Faser-Matrix-Halbzeuge 2 Organobleche verwendet.

Die Fig. 2 zeigt schematisch unterschiedliche Ausrichtungen der in die Kunstoff-Matrix 5 integrierten Verstärkungsfasern 4 in Bezug auf die Bahnrichtung x (s. Fig. 1) des Faser-Matrix-Halbzeuges 2. In der linken Darstellung der Fig. 2 sind die Verstärkungsfasern 4 erfindungsgemäß allesamt in Bahnrichtung x ausgerichtet. In der nicht zur Erfindung gehörenden mittleren und rechten Darstellung sind die Verstärkungsfasern 4 gitterförmig angeordnet. Während in der mittleren Darstellung die Verstärkungsfasern 4 parallel bzw. senkrecht zur Bahnrichtung x ausgerichtet sind, sind in der rechten Darstellung die Verstärkungsfasern 4 in einem Winkel α von 45° zur Bahnrichtung x ausgerichtet.

In den Figuren 3a, 3b und 3e ist das Extrusionsprofil 1 als geschlossenes Hohlprofil ausgebildet. Alternativ hierzu ist aber auch denkbar, mit dem erfindungsgemäßen Verfahren ein offenes Hohlprofil zu erzeugen (Fig. 3d). In den soeben genannten Ausführungsbeispielen ist der Querschnitt des Extrusionsprofils 1 rechtwinklig, insbesondere quadratisch. Die Figuren 3c und 3f zeigen hingegen ein Doppel-T-Profil, wobei natürlich auch ein einfaches T-Profil im Rahmen der Erfindung liegt. Ferner sind selbstverständlich auch andere Querschnittsprofile mit dem erfindungsgemäßen Verfahren herstellbar. Bei dem in Fig. 3f dargestellten Profil 1 wurde neben dem Faser-Matrix-Halbzeug 2 zusätzlich ein Metallblech 9 in die Basis-Kunststoff-Matrix 6 einextrudiert.

Die Fig. 4 zeigt ein bandförmiges Faser-Matrix-Halbzeug 2 im Querschnitt. Es ist erkennbar, dass die Verstärkungsfasern 4 in die Kunststoff-Matrix 5 integriert sind und gemeinsam mit dieser das Faser-Matrix-Halbzeug 2 bilden. Zur Herstellung des Faser-Matrix-Halbzeuges 2 werden die Verstärkungsfasern 4 zunächst in der Kunststoff-Matrix 5 getränkt. Danach erfolgt die Konsolidierung der Matrix 5, wodurch das fertige Faser-Matrix-Halbzeug 2 entsteht. Dieses wird dann während des Extrusionsprozesses in die Basis-Kunststoff-Matrix 6 einextrudiert.

## Patentansprüche

1. Verfahren zur Herstellung eines faserverstärkten Extrusionsprofils,
- wobei zunächst mindestens ein als Organoblech ausgebildetes bandförmiges Faser-Kunststoff-Halbzeug aus einer thermoplastischen Kunststoff-Matrix, in die endlose Verstärkungsfasern integriert sind, von einer Bandrolle abgezogen wird,
- wobei die Verstärkungsfasern des Faser-Kunststoff-Halbzeugs allesamt in Bandrichtung ausgerichtet sind,
- wobei danach das Organoblech vorgewärmt wird,
- wobei dieses danach in eine Basis-Kunststoff-Matrix einextrudiert wird und
- wobei die Oberfläche des Extrusionsprofils ausschließlich von der Basis-Kunststoff-Matrix gebildet wird.

2. Verfahren nach Anspruch 1, **dadurch gekennzeichnet, dass** das Faser-Matrix-Halbzeug vor dem Extrusionsprozess umgeformt, insbesondere geknickt oder gekrümmt, wird.

3. Verfahren nach Anspruch 1 oder 2, **dadurch gekennzeichnet, dass** mehrere Faser-Matrix-Halbzeuge in die Basis-Kunststoff-Matrix einextrudiert werden.

4. Verfahren nach einem der Ansprüche 1 bis 3, **dadurch gekennzeichnet, dass** das Extrusionsprofil als geschlossenes oder offenes Hohlprofil ausgebildet ist.

## Claims

1. Process for the production of a fibre-reinforced extruded profile,
- where firstly at least one semifinished fibre-plastics product in the form of a strip of organosheet made of a thermoplastic matrix into which continuous reinforcement fibres have been integrated is drawn off from a strip on a roll,
- where the orientation of all of the reinforcement fibres of the semifinished fibre-plastics product is in the direction of the strip,
- where the organosheet is then preheated,
- where this is then extruded into a main plastics matrix and
- where the surface of the extruded profile is formed exclusively by the main plastics matrix.

2. Process according to Claim 1, **characterized in that** before the extrusion process the semifinished fibre-matrix product is subjected to a forming process, in particular is angled or bent.

3. Process according to Claim 1 or 2, **characterized in that** a plurality of semifinished fibre-matrix products are extruded into the main plastics matrix.

4. Process according to any of Claims 1 to 3, **characterized in that** the extruded profile takes the form of a closed or open hollow profile.

## Revendications

1. Procédé de fabrication d'un profilé d'extrusion renforcé par des fibres,
- au moins un produit semi-fini en fibres-matériau synthétique sous forme de bande, réalisé sous forme de tôle organique, constitué par une matrice en matériau synthétique thermoplastique dans laquelle des fibres de renforcement continues sont intégrées, étant d'abord retiré d'un rouleau de bande,
- les fibres de renforcement du produit semi-fini de fibres-matériau synthétique étant toutes orientées dans le sens de la bande,
- la tôle organique étant ensuite préchauffée,
- celle-ci étant ensuite extrudée dans une matrice en matériau synthétique de base et
- la surface du profilé d'extrusion étant exclusivement formée par la matrice de matériau synthétique de base.

2. Procédé selon la revendication 1, **caractérisé en ce que** le produit semi-fini en fibres-matrice est façonné, en particulier plié ou courbé, avant le procédé d'extrusion.

3. Procédé selon la revendication 1 ou 2, **caractérisé en ce que** plusieurs produits semi-finis en fibres-matrice sont extrudés dans la matrice de matériau synthétique de base.

4. Procédé selon l'une quelconque des revendications 1 à 3, **caractérisé en ce que** le profilé d'extrusion est réalisé sous forme de profilé creux fermé ou ouvert.
